# EUROPÄISCHE PATENTSCHRIFT

(11) **EP 3 860 307 B1**
(45) Veröffentlichungstag und Bekanntmachung des Hinweises auf die Patenterteilung: **17.07.2024**
(21) Anmeldenummer: 21152548.0
(22) Anmeldetag: 20.01.2021
(51) Int. Cl.: H05B 6/06

(54) **SYSTEM MIT EINEM KOCHFELD UND EINEM KOCHGESCHIRR UND VERFAHREN ZUM BETRIEB DES SYSTEMS**
SYSTEM WITH A COOKING HOB AND COOKWARE AND METHOD FOR OPERATING THE SYSTEM
SYSTÈME DOTÉ D'UNE PLAQUE DE CUISSON ET D'UN USTENSILE DE CUISSON ET PROCÉDÉ DE FONCTIONNEMENT DUDIT SYSTÈME

(30) Priorität: 28.01.2020 DE 102020201005
(43) Veröffentlichungstag der Anmeldung: 04.08.2021
(73) Patentinhaber: E.G.O. Elektro-Gerätebau GmbH, 75038 Oberderdingen (DE)
(72) Erfinder: Frank, Marcus, 75056 Sulzfeld (DE); Münzner, Frank, 56479 Willingen (DE); Müller, Max-Felix, 75038 Oberderdingen (DE)
(74) Vertreter: Patentanwälte Ruff, Wilhelm, Beier, Dauster & Partner mbB

(56) Entgegenhaltungen:
- EP-A1- 3 001 771
- EP-A1- 3 244 694
- EP-A2- 3 614 796
- WO-A1-2014/056786

## Beschreibung

Die Erfindung betrifft ein System mit einem Kochfeld und einem Kochgeschirr, das auf dem Kochfeld beheizt werden soll. Des Weiteren betrifft die Erfindung ein Verfahren zum Betrieb des Systems, und zwar zum induktiven Beheizen des Kochgeschirrs mit dem Kochfeld. Das Kochgeschirr weist eine Kochgeschirr-Steuerung auf, die mit einer Induktionsheizeinrichtung des Kochfelds verknüpft werden soll als Zuordnung, was vorteilhaft durch eine Kochfeld-Steuerung erfolgt.

Aus der DE 102018221521 A1 ist es bekannt, durch Erzeugen von kurzen Impulsen bzw. sogenannten Pings mit einer bestimmten Codierung, die für jede Induktionsheizeinrichtung des entsprechenden Kochfelds unterschiedlich sind, anhand eines empfangenen Signals am Kochgeschirr eine Zuordnung zu einer bestimmten Induktionsheizeinrichtung vorzunehmen. Dies ist aber unter Umständen fehleranfällig und nicht sicher und somit nicht alltagstauglich.

Aus der DE 10 2004 016 631 A1 ist eine Anordnung bekannt, mit der das Aufsetzen eines Kochgeschirrs sowie dessen Position an einer Heizeinrichtung bzw. an einem Heizbereich bei einem Kochfeld erkannt werden kann. Hier sind mehrere kapazitiv wirkende Sensoren im Außenbereich einer Heizeinrichtung vorgesehen. Die Erkennung des Aufsetzens des Kochgeschirrs über die Heizeinrichtung erfolgt also kapazitiv.

Aus der EP 3244694 A1 ist ein Kochsystem mit einem Kochfeld mit mehreren Kochstellen und einem Kochgeschirr bekannt. Am Kochfeld befindet sich ein Körperschallerzeuger, und am Kochgeschirr befindet sich ein Körperschallsensor. Damit ist eine Kommunikation zwischen beiden möglich. Ist jeder Kochstelle ein eigener Körperschallerzeuger zugeordnet, so kann durch ein Aufsetzen des Kochgeschirrs direkt darüber an dem Körperschallsensor dieses Kochgeschirrs eine Erkennung von Körperschallsignalen erfolgen, die von dieser Kochstelle ausgesandt worden sind. So kann beispielsweise eine direkte und genaue Zuordnung eines bestimmten Kochgeschirrs zu einer bestimmten Kochstelle erfolgen, um dann mit einer Heizeinrichtung dieser Kochstelle genau dieses Kochgeschirr auf gewünschte Art und Weise zu beheizen.

Aus der EP 3001771 A1 ist es bekannt, an einem Kochfeld mit mehreren Kochstellen samt Heizeinrichtungen ein Kochgeschirr aufsetzen zu können. Jedes Kochgeschirr weist einen Temperatursensor und einen Sender auf. Das Kochfeld selbst weist einen Empfänger auf, um die gesendeten Temperaturdaten der Temperatursensoren erkennen zu können. Durch gezieltes

Beheizen einer Kochstelle kann an einen Temperatursensor eines darüber aufgesetzten Kochgeschirrs ein Temperaturanstieg festgestellt werdenum es als eindeutige Zuordnung dieses Kochgeschirrs zu dieser Kochstelle werten zu können. Auch dann ist eine spezifische zugeordnete Beheizung genau dieses Kochgeschirrs mit genau dieser Kochstelle möglich.

Aus der nicht vorveröffentlichten EP 3614796 A1 mit älterem Zeitrang ist es bekannt, an einem Kochfeld mit mehreren Kochstellen ein spezielles Kochgeschirr aufsetzen zu können. Dieses Kochgeschirr weist in einem Kochgeschirrboden eine Induktionsspule auf, die mit einer Messeinrichtung verbunden ist. Jede Kochstelle weist eine Induktionsspule auf, die in die Induktionsspule im Kochgeschirrboden ein magnetisches Feld induziert und somit eine Spannung induziert. Mit dieser Spannnung kann das Kochgeschirr einen Beschleunigungssensor betreiben, dessen Signale mittels eines Bluetooth-Senders an eine Kochfeldsteuerung gesandt werden können. Durch die induktive Kopplung wird in der Induktionsspule im Kochgeschirrboden eine Vibration erzeugt, die dann in dem Beschleunigungssensor erkannt werden kann.

Aus der WO 2014/056786 A1 ist ein Aufsatzgerät bekannt, das auf einem Kochfeld mit einer Kochstelle, die eine Induktionsheizspule aufweist, betrieben werden kann. Dazu weist das Aufsatzgerät eine Empfangsspule darin auf. Mit der Induktionsheizspule kann der Boden des Aufsatzgeräts induktiv beheizt werden zum Erwärmen von darin befindlichen Lebensmitteln. Des Weiteren kann in der Empfangsspule eine Spannung induziert werden, die eine Steuerung des Aufsatzgeräts mit elektrischer Energie versorgen kann. Alternativ kann damit auch ein Motor für eine Mix-Funktion betrieben werden, falls das Aufsatzgerät als Mixer ausgebildet ist.

### Aufgabe und Lösung

Der Erfindung liegt die Aufgabe zugrunde, ein eingangs genanntes System sowie ein eingangs genanntes Verfahren zu schaffen, mit denen Probleme des Standes der Technik gelöst werden können und es insbesondere möglich ist, eine Zuordnung eines bestimmten Kochgeschirrs zu einer bestimmten Induktionsheizeinrichtung einfach und zuverlässig vornehmen zu können. Gelöst wird diese Aufgabe durch ein System mit den Merkmalen des Anspruchs 1 sowie durch ein Verfahren mit den Merkmalen des Anspruchs 11. Vorteilhafte sowie bevorzugte Ausgestaltungen der Erfindung sind in den weiteren Ansprüchen enthalten und werden im Folgenden näher erläutert. Dabei werden manche der Merkmale nur für das System oder nur für das Verfahren beschrieben. Sie sollen jedoch unabhängig davon sowohl für ein System als auch für ein Verfahren selbständig und unabhängig voneinander gelten können. Der Wortlaut der Ansprüche wird durch ausdrückliche Bezugnahme zum Inhalt der Beschreibung gemacht.

Das System weist ein Kochfeld und mindestens eine Induktionsheizeinrichtung am Kochfeld auf, vorteilhaft mehrere Induktionsheizeinrichtungen. Des Weiteren weist das System ein Kochgeschirr auf, das auf dem Kochfeld aufgesetzt induktiv beheizt werden soll zum Kochen bzw. Zubereiten von Gargut darin.

Das Kochfeld weist eine Kochfeldplatte sowie mindestens eine Induktionsheizeinrichtung unterhalb der Kochfeldplatte auf, mit der das Kochgeschirr induktiv beheizt werden kann. Eine solche Induktionsheizeinrichtung kann vorteilhaft ausgebildet sein wie im Stand der Technik bekannt. Es können auch mehrere Induktionsheizeinrichtungen, insbesondere Induktionsheizspulen, dazu vorgesehen sein, gemeinsam eine sogenannte Kochstelle zum induktiven Beheizen eines einzigen Kochgeschirrs zu bilden. Dies ändert nichts an der vorteilhaften Verwendbarkeit des erfindungsgemäßen Verfahrens, es kann dann eben für eine einzige, für einige oder für alle Induktionsheizeinrichtungen dieser Kochstelle durchgeführt werden. Das Kochfeld weist noch eine Kochfeld-Steuerung und eine mit dieser verbundene Kommunikationseinrichtung zur drahtlosen Kommunikation mit dem Kochgeschirr auf. Die drahtlose Kommunikation erfolgt vorteilhaft mit einem üblichen Funkstandard, beispielsweise WLAN, Bluetooth, BLE, Zigbee odgl.. Schließlich weist das Kochfeld noch eine Leistungsversorgung für die mindestens eine Induktionsheizeinrichtung auf, die ebenfalls mit der Kochfeld-Steuerung verbunden ist und insbesondere von der Kochfeld-Steuerung Vorgaben für eine Leistungserzeugung an der Induktionsheizeinrichtung erhält. Diese Vorgaben zur Leistung können durch eine Bedienereingabe an einer Bedieneinrichtung des Kochfelds erzeugt werden, alternativ durch ein automatisch ablaufendes Kochprogramm odgl. generiert.

Das Kochgeschirr wiederum weist einen Vibrationssensor zur Erfassung von Vibrationen am Kochgeschirr auf, wozu der Vibrationssensor am Kochgeschirr befestigt oder angebracht ist. Möglichkeiten hierzu werden noch später erläutert, auf alle Fälle ist der Vibrationssensor derart am Kochgeschirr angeordnet, dass er Vibrationen des Kochgeschirrs oder am Kochgeschirr erfassen kann. Ein derartiger Vibrationssensor kann beispielsweise auf einem piezoelektrischen Effekt oder MEMS-Technologie basieren. Das Kochgeschirr weist auch eine Kochgeschirr-Steuerung auf, die mit dem Vibrationssensor verbunden ist und die dessen Sensorsignale erkennen kann. Insbesondere kann sie Frequenz und/oder Stärke der Vibrationen erkennen. Mit der Kochgeschirr-Steuerung ist eine Kommunikationseinrichtung des Kochgeschirrs verbunden, die zur drahtlosen Kommunikation mit der Kommunikationseinrichtung des Kochfelds ausgebildet ist, so dass zumindest Informationen oder Signalisierungen vom Kochgeschirr zum Kochfeld gesendet werden können, vorteilhaft auch bidirektional.

Erfindungsgemäß ist die Kochfeld-Steuerung dazu ausgebildet, ein Verfahren durchzuführen, bei dem die Induktionsheizeinrichtung mittels der Leistungsversorgung mit einem bestimmten vorgegebenen zeitlichen Muster einer Leistungserzeugung angesteuert wird. Dieses bestimmte zeitliche Muster ist dann vorteilhaft für genau diese Induktionsheizeinrichtung charakteristisch. Das zeitliche Muster der Leistungserzeugung weist vorteilhaft eine zeitliche Variation und ggf. zusätzlich eine Variation der Höhe der Leistungserzeugung auf, besonders vorteilhaft erfolgt eine Unterscheidung anhand zeitlich unterschiedlicher oder versetzter Signale. Diese können besonders gut erkannt werden. Die Induktionsheizeinrichtung setzt also dieses vorgegebene zeitliche Muster für die Leistungserzeugung um und arbeitet entsprechend diesem Muster bzw. erzeugt entsprechend diesem Muster induktive Felder, vorteilhaft jeweils nur für kurze Zeit als eine Art Puls oder Ping. Für jede Induktionsheizeinrichtung des Kochfelds kann ein eigenes zeitliches Muster vorgegeben sein. Das Muster kann auch eine Codierung sein bzw. einer Codierung oder einem Code entsprechen.

Entsprechend dem Muster der Leistungserzeugung an der Induktionsheizeinrichtung wird die Leistung induktiv auf das Kochgeschirr übertragen, auch wenn sie vorteilhaft gering ist. Dadurch wird dieses bekanntermaßen zu Schwingungen bestimmter Frequenz angeregt, allerdings in der Regel mit einer Frequenz unterhalb der Arbeitsfrequenz der Induktionsheizeinrichtung, die häufig bei 15 kHz bis 30 kHz liegen kann. Diese Schwingungen oder Vibrationen am Kochgeschirr erfasst der Vibrationssensor, und zwar hinsichtlich ihrer zeitlichen Dauer oder der Dauer von Pausen dazwischen, möglicherweise auch bezüglich der Höhe bzw. Stärke der Vibrationen. Auch die Frequenz dieser Schwingungen kann möglicherweise erfasst werden. Ebenfalls sind jegliche Kombinationen der zuvor genannten Kriterien denkbar. Das von dem Vibrationssensor am Kochgeschirr erkannte Muster von Vibrationen bzw. des zeitlichen Auftretens von Vibrationen entspricht in etwa dem Muster der Leistungserzeugung, erlaubt also eine eindeutige Erkennung und dann auch Zuordnung. Dieses Muster wird von der Kochgeschirr-Steuerung erkannt, vorzugsweise auch identifiziert, und eine dem Muster entsprechende Signalisierung, möglicherweise auch nur dieses Muster selbst, wird dann mittels der Kommunikationseinrichtung drahtlos an die Kommunikationseinrichtung des Kochfelds gesendet. Die damit verbundene Kochfeld-Steuerung wiederum vergleicht dies anhand der empfangenen Signalisierung mit dem Muster der Leistungserzeugung für die genannte Induktionsheizeinrichtung oder aller Induktionsheizeinrichtungen, die die Kochfeld-Steuerung zur Leistungserzeugung veranlasst hat. Die Kochfeld-Steuerung weiß also, welche Induktionsheizeinrichtung mit welchem Muster einer Leistungserzeugung betrieben worden ist, wobei dieses Muster für sämtliche Induktionsheizeinrichtungen unterschiedlich ist. Anhand der Rückantwort von der Kochgeschirr-Steuerung kann die Kochfeld-Steuerung dann für den Fall, dass die von der Kochgeschirr-Steuerung empfangene Signalisierung zu dem Muster der Leistungserzeugung der Induktionsheizeinrichtung passt bzw. diesem entspricht, das Kochgeschirr darüber aufgesetzt und als von dieser Induktionsheizeinrichtung beheizt und somit zu dieser Induktionsheizeinrichtung zugehörig definieren. Somit kann gerade hinsichtlich der Kommunikation zwischen der einen Kochfeld-Steuerung und den gegebenenfalls mehreren Kochgeschirr-Steuerungen genau berücksichtigt werden, welches Kochgeschirr mit welcher Kochgeschirr-Steuerung über welcher Induktionsheizeinrichtung aufgesetzt ist. Der reine Zeitpunkt des Aufsetzens des Kochgeschirrs auf das Kochfeld bzw. über eine Induktionsheizeinrichtung, was zweckmäßigerweise von einem Kochgeschirr-Erkennungsverfahren als an sich bekannter induktiver Topferkennungssensor erkannt werden kann, verbunden mit einem neu festgestellten Kochgeschirr, wird als zu ungenau angesehen. Mit dem erfindungsgemäßen Verfahren kann tatsächlich direkt überprüft werden, ob eine von der Induktionsheizeinrichtung induktiv erzeugte Signalisierung mit bestimmtem Muster an dem Kochgeschirr sozusagen empfangen wird in Form der Vibrationen, die exakte Rückschlüsse auf dieses Muster erlauben. Diese Information kann dann von der Kochgeschirr-Steuerung zurück signalisiert werden für die eindeutige Zuordnung. Somit ist die Betriebssicherheit deutlich erhöht und weitere vorteilhafte Funktionen können auf dieser gesichert definierten Zuordnung bzw. Zugehörigkeit erreicht werden. Die Zuordnung von Muster zu Kochgeschirr kann im Kochgeschirr selbst, im Kochfeld oder auf einer dritten Funktionseinheit, beispielsweise einem Smartphone oder in einer Cloud, erfolgen.

Eine der möglichen vorgenannten weiteren Funktionen kann darin bestehen, dass das Kochgeschirr einen Temperatursensor aufweist zur Erfassung einer Temperatur am Kochgeschirrboden oder im Kochgeschirr. Insbesondere soll mit dem Temperatursensor die Temperatur von Gargut im Kochgeschirr erfasst werden können, also welche Temperatur dieses aufweist. Dies kann vor allem für sogenannte Automatikprogramme beim Kochen verwendet werden, möglicherweise auch für Sicherheitsfunktionen. Der Temperatursensor ist dazu mit der Kochgeschirr-Steuerung verbunden, insbesondere mittels eines Anschlusskabels. Zwar ist auch eine Funkverbindung möglich, hier ist aber die Gefahr von Störungen bei metallischen Kochgeschirren, wie sie für induktives Kochen verwendet werden, sowie auch aufgrund der Induktionsheizeinrichtungen selbst häufig problematisch. Informationen des Temperatursensors sendet die Kochgeschirr-Steuerung dann mittels der Kommunikationseinrichtung an die Kochfeld-Steuerung zur Verarbeitung der Informationen dort.

Ein solcher Temperatursensor kann in Ausgestaltung der Erfindung lösbar an dem Kochgeschirr befestigt werden und dazu entsprechend ausgebildet sein. So kann er beispielsweise mittels einer Rasteinrichtung oder mittels Magnetkraft befestigt werden. Dies weist den Vorteil auf, dass der Temperatursensor nur für den Kochvorgang selbst am Kochgeschirr befestigt werden muss, und ansonsten abgenommen werden kann, beispielsweise auch für ein Reinigen des Kochgeschirrs, insbesondere in einer Spülmaschine. Bei allen Befestigungsmöglichkeiten sollte darauf geachtet werden, dass der Vibrationssensor derart mit dem Kochgeschirr verbunden ist, dass er dessen Vibrationen gut erfassen kann. Vorteilhaft ist der Temperatursensor nahe an dem Kochgeschirrboden angebracht, besonders vorteilhaft im Inneren des Kochgeschirrs. So kann er in Kontakt mit darin befindlichem Gargut sein.

Ein Kochgeschirr kann bevorzugt einen Kochgeschirrboden und eine nach oben daran anschließende umlaufende Kochgeschirrwandung aufweisen. Mindestens eine Griffeinrichtung sollte seitlich an der Kochgeschirrwandung vorgesehen sein. Das Kochgeschirr kann ein Topf in verschiedener Form, beispielsweise auch als Kasserolle, sowie eine Pfanne sein.

In vorteilhafter Ausgestaltung der Erfindung ist der Vibrationssensor selbst nicht innerhalb des Kochgeschirrbehälters angeordnet. So stört er darin stattfindende Kochvorgänge nicht. Er muss also zum Einen nicht zwingend wasserdicht ausgebildet sein, zum Anderen könnte er eben vor allem bei einem Rühren in dem Kochgeschirr stören. Insbesondere kann er an einer Außenseite der Kochgeschirrwandung oder an einer Griffeinrichtung des Kochgeschirrs angeordnet sein. Bei metallischen Kochgeschirren kann davon ausgegangen werden, dass im Kochgeschirrboden entstehende Vibrationen aufgrund der induktiven Leistungserzeugung der Induktionsheizeinrichtung bzw. deren Leistungsübertragung nahezu überall am Kochgeschirr gleich erfasst werden können. Dies ist sogar bei einem Kochgeschirrdeckel als Teil des Kochgeschirrs möglich. Als besonders vorteilhaft wird ein Ort angesehen, an dem die Temperatur nicht maximal ist bzw. vorzugsweise minimal ist. So kann der Vibrationssensor an einer Außenseite der Kochgeschirrwandung möglichst weit oben oder an einer Griffeinrichtung des Kochgeschirrs angeordnet sein, hier vorteilhaft möglichst weit entfernt von der Kochgeschirrwandung.

Ähnlich wie zuvor für den Temperatursensor beschrieben kann auch der Vibrationssensor so ausgebildet sein, dass er werkzeuglos lösbar am Kochgeschirr befestigt werden kann. Die Vorteile sind hier genau dieselben. Ebenso kann hierzu vorteilhaft eine Rasteinrichtung oder Magnetkraft dienen.

In einer weiteren Ausgestaltung können zusätzlich oder alternativ zu der Temperatur auch andere Größen gemessen werden, beispielsweise ein Druck in einem Kochgeschirr als Dampfdruckkochtopf. In den zuvor beschriebenen vorteilhaften Ausgestaltungen ist ein Temperatursensor implementiert, der die Kochgeschirrtemperatur misst. Dies ist jedoch nicht zwangsläufig erforderlich. In einer weiteren Ausgestaltung können über die drahtlose Kommunikation bzw. Informationsübertragung lediglich Informationen zur Beschaffenheit des Kochgeschirrs übertragen werden. Diese können beispielsweise genutzt werden, um die Genauigkeit von Temperaturregeleinrichtungen unter Nutzung der temperaturabhängigen Resonanzfrequenzänderung eines Kochgeschirrs zu verbessern, wie sie beispielsweise in der DE 102009047185 A1 und der EP 3177107 A1 beschrieben sind. Solche Temperaturregeleinrichtungen haben nämlich das Problem, dass die temperaturabhängigen Resonanzfrequenzänderungen verschiedener Kochgeschirrkonstruktionen und Kochgeschirrmaterialien unterschiedlich sind. Wären Bauform und Material jedoch bekannt, könnte auf diese Informationen zurückgegriffen werden. In dieser Ausgestaltung könnte dem Kochfeld beispielsweise lediglich Hersteller und Typ des zugeordneten Kochgeschirrs übermittelt werden. Das Kochfeld ruft mit diesen Daten innerhalb einer Datenbank die Regelparameter für dieses Kochgeschirr ab, vorteilhaft über eine Internet-Verbindung bzw. aus einer Cloud, und benutzt sie zur Regelung bzw. für ein Automatikprogramm.

Zur Ausbildung des Vibrationssensors an sich ist zu sagen, dass dieser beliebig ausgebildet sein kann, solange er Vibrationen mit Frequenzen von bis zu 10 kHz oder 30 kHz erkennen kann. Mögliche Sensortypen sind dabei Körperschallsensoren, Beschleunigungssensoren, Vibrationsaufnehmer, Schwingungsaufnehmer, Accelerometer, G-Sensoren sowie für beispielsweise Mikrofone verwendete Piezo-Sensoren oder Kondensator-Sensoren. Je nach verwendetem Sensor für den Vibrationssensor kann ein Signalverstärker vorgesehen sein, insbesondere direkt am Vibrationssensor bzw. in einer Baueinheit mit dem Vibrationssensor. Der Vibrationssensor sollte also zur Erfassung von mechanischen Schwingungen bzw. Körperschall ausgebildet sein und nicht zur Erfassung von akustischen und/oder optischen Veränderungen ausgebildet sein. Insbesondere soll also nicht das Geräusch der Vibrationen am Kochgeschirr erfasst werden, sondern diese Vibrationen selbst.

Eine Signalverbindung zwischen Vibrationssensor und Kochgeschirr-Steuerung kann grundsätzlich zwar per Funk erfolgen, vorteilhaft wird hier ebenfalls ein Anschlusskabel verwendet. In weiterer Ausgestaltung der Erfindung ist es möglich, dass der Vibrationssensor und die Kochgeschirr-Steuerung sowie die Kommunikationseinrichtung in einer gemeinsamen Baueinheit angeordnet sind. Dann ist insbesondere die Verbindung zwischen Vibrationssensor und Kochgeschirr-Steuerung sowie mit der Kommunikationseinrichtung sehr einfach. Dabei kann ein Vibrationssensor beispielsweise an einen AD-Eingang eines Mikrocontrollers angeschlossen und von diesem gesampelt werden. Dies ist in vielen Fällen auch ohne zusätzliche Verstärkung möglich. Diese gemeinsame Baueinheit ist vorteilhaft in einem gemeinsamen Gehäuse angeordnet, welches dann wiederum auf vorgenannte Art und Weise an dem Kochgeschirr werkzeuglos lösbar befestigt sein kann. Gerade auch angesichts einer Temperaturempfindlichkeit der Kochgeschirr-Steuerung empfiehlt sich dies für die Baueinheit stark. Da der Temperatursensor, falls er überhaupt vorhanden ist, vorteilhaft mit einem Kabel mit der Kochgeschirr-Steuerung bzw. der Baueinheit verbunden ist, kann entweder eine Steckverbindung zwischen diesen Teilen gelöst werden oder aber auch der Temperatursensor auf vorgenannte Art und Weise entfernt werden.

In nochmals weiterer Ausgestaltung der Erfindung ist es möglich, dass am Kochgeschirr eine eigene Energiequelle angeordnet ist bzw. die Kochgeschirr-Steuerung eine solche eigene Energiequelle aufweist. Als eine solche Energiequelle können vorteilhaft eine Batterie oder ein wiederaufladbarer Akkumulator verwendet werden. Gerade wenn der Funkstandard zwischen den Kommunikationseinrichtungen von Kochgeschirr und Kochfeld BLE ist, ist der Energieverbrauch relativ gering, so dass ein Wechsel oder ein Aufladen nicht allzu häufig notwendig werden. Alternativ kann die Kochgeschirr-Steuerung bzw. die damit versehene Baueinheit zur eigenen Energieversorgung einen Induktionsgenerator mit einer Induktionsspule aufweisen, die aus dem von der Induktionsheizeinrichtung erzeugten induktiven Feld Energie gewinnt. Dazu ist die Induktionsspule bevorzugt im unteren Bereich des Kochgeschirrs angeordnet, besonders bevorzugt am Kochgeschirrboden oder sogar an der Unterseite des Kochgeschirrbodens, beispielsweise in einer eigenen Ausnehmung. Für die technische Machbarkeit wird hierzu auf die vorgenannte DE 10 2018 221 521.9 verwiesen. Diese Induktionsspule ist dann vorteilhaft mit einem Kabel mit dem Induktionsgenerator und der Kochgeschirr-Steuerung verbunden. Alternativ ist es möglich, die Kochgeschirr-Steuerung über einen sogenannten Thermogenerator mit Energie zu versorgen, der aus einer Temperaturdifferenz elektrische Energie erzeugt.

Die vorgenannte Leistungsversorgung für die Induktionsheizeinrichtung des Kochfelds kann ausgebildet sein wie bei einem normalen Induktionskochfeld, vorteilhaft mit Leistungsschaltern bzw. Halbleiter-Leistungsschaltern, beispielsweise in Halbbrücken- oder Vollbrücken-Konfiguration.

Das Verfahren, um das vorbeschriebene System zu betreiben, kann entweder gestartet werden, indem das Kochfeld überhaupt erst eingeschaltet wird, nachdem es zuvor ausgeschaltet war. Sobald das Kochfeld eingeschaltet ist, wird ein Kochgeschirr auf die Kochfeldplatte über der oder über einer der Induktionsheizeinrichtungen aufgesetzt. Alternativ kann auch bei einem bereits eingeschalteten Kochfeld einfach ein neues Kochgeschirr auf die Kochfeldplatte entsprechend aufgesetzt werden. Das Aufsetzen des Kochgeschirrs über der oder über einer Induktionsheizeinrichtung wird von der Kochfeld-Steuerung erkannt, vorteilhaft mittels eines vorgenannten Verfahrens zur Topferkennung, wie dies für Induktionsheizeinrichtungen üblich ist. Dabei wird eine Induktionsheizeinrichtung, über der sich kein Kochgeschirr befindet, in regelmäßigen Abständen, beispielsweise 1 sec bis 10 sec oder sogar bis 1 min, kurzzeitig mit Leistung versorgt als eine Art kurzer Ping oder Impuls. Dabei kann an der Antwort darauf bzw. an der Leistungsversorgung der Induktionsheizeinrichtung erfasst werden, ob ein induktiv beheizbarer Gegenstand über der Induktionsheizeinrichtung aufgesetzt ist. Ist dies der Fall, so wird ein Kochgeschirr als aufgesetzt angenommen. Dieses ist allerdings noch nicht identifiziert, wofür dann eben das erfindungsgemäße Verfahren durchgeführt wird. Hier kann in Erweiterung der Erfindung vorgesehen sein, dass bei einer Induktionsheizeinrichtung erst dann das Kochgeschirr-Erkennungsverfahren gestartet wird, wenn sie aktiviert wird bzw. wenn eine Leistung für sie vorgegeben worden ist, entweder durch eine Bedienperson oder durch ein vorgenanntes Automatikprogramm.

Ist das Aufsetzen eines Kochgeschirrs erkannt worden, wird die Induktionsheizeinrichtung mit dem bestimmten vorgegebenen Muster betrieben, wodurch dem Muster entsprechende Vibrationen am darüber aufgesetzten Kochgeschirr entstehen. Diese werden erfasst und dienen wie eingangs erläutert dazu, das erkannte Kochgeschirr zu genau dieser Induktionsheizeinrichtung zuzuordnen. Haben mehrere Induktionsheizeinrichtungen, die nebeneinander angeordnet sind, gleichzeitig erfasst, dass über ihnen ein Kochgeschirr aufgesetzt worden ist, so können sie zu einer Heizgruppe zusammengefasst werden. Sie werden dann gemeinsam betrieben zum induktiven Beheizen des Kochgeschirrs, zumindest wenn sie jeweils ausreichend überdeckt worden sind. Dabei kann es ausreichend sein, das Zuordnungsverfahren nur für eine dieser Induktionsheizeinrichtungen durchzuführen, wobei es vorzugsweise für die am stärksten bedeckte durchgeführt wird bzw. nicht für die am geringsten überdeckte Induktionsheizeinrichtung. Alternativ kann es auch für sämtliche überdeckten Induktionsheizeinrichtungen durchgeführt werden, so dass die Zusammenfassung zu einer gemeinsamen Heizgruppe noch einmal dadurch überprüft wird, dass erfasst wird, ob ein erzeugtes Muster einer Leistungserzeugung auch tatsächlich als Muster von Vibrationen am Kochgeschirr erkannt werden kann.

In weiterer möglicher Ausgestaltung der Erfindung kann vorgesehen sein, dass zusätzlich zur Zuordnung des Kochgeschirrs zu einer Induktionsheizeinrichtung aufgrund der Signalisierung anhand des Vibrationssensors auch ein tatsächliches Beheizen des Kochgeschirrs durch diese Induktionsheizeinrichtung überprüft wird. Dazu kann, wenn das Kochgeschirr nach erfolgter Zuordnung mittels der mindestens einen zugeordneten Induktionsheizeinrichtung induktiv beheizt wird, nach einer bestimmten vorgegebenen Überprüfungszeit überprüft werden, ob an einem am Kochgeschirr vorhandenen Temperatursensor auch tatsächlich ein Temperaturanstieg erfolgt. Diese Überprüfungszeit kann zwischen 5 sec und 1 min liegen. Diese relativ kurze Zeit reicht in der Regel aus, um einen deutlich erfassbaren Temperaturanstieg am Kochgeschirr zu erfassen. Dieser Temperaturanstieg sollte auch kontinuierlich sein, so dass er nicht dadurch erzeugt worden sein kann, dass heißes Gargut in das Kochgeschirr eingefüllt worden ist. Für den Fall, dass nach der bestimmten vorgegebenen Überprüfungszeit kein Temperaturanstieg am Temperatursensor erkannt werden kann, wird der Vorgang bzw. das Verfahren des Erkennens bzw. des Zuordnens der Induktionsheizeinrichtung zu dem Kochgeschirr neu gestartet. Dann wird auch wieder der Temperaturanstieg innerhalb der Überprüfungszeit überprüft, wie beispielsweise in der EP 3001771 A1 beschrieben ist. Erfolgt dann wieder kein Temperaturanstieg, sollte mindestens eine Fehlermeldung optisch und/oder akustisch an eine Bedienperson ausgegeben werden. Vorteilhaft sollte die Induktionsheizeinrichtung deaktiviert werden.

In weiterer Ausgestaltung der Erfindung kann vorgesehen sein, dass ein tatsächliches Beheizen des Kochgeschirrs überprüft wird, indem der Vibrationssensor abgefragt wird. Er müsste dann eigentlich dem induktiven Heizvorgang entsprechende Vibrationen, und zwar kontinuierlich bzw. gleichzeitig mit einer tatsächlich erfolgenden Leistungserzeugung, erfassen. Ansonsten liegt ein Fehler vor, was einer Bedienperson angezeigt werden sollte.

In weiterer Ausgestaltung der Erfindung kann vorgesehen sein, dass mittels des Vibrationssensors oder eines entsprechend geeigneten Beschleunigungssensors eine Vertikalbewegung und/oder eine seitliche Bewegung des Kochgeschirrs erkannt wird von der Kochgeschirr-Steuerung. Diese überträgt dann eine entsprechende Signalisierung über die Kommunikationseinrichtungen an die Kochfeld-Steuerung. Diese Kochfeld-Steuerung kann dadurch explizit angestoßen werden, zusammen mit der Leistungsversorgung der mindestens einen Induktionsheizeinrichtung und einem Betriebsverfahren der Induktionsheizeinrichtung als induktiver Topferkennungssensor wie zuvor erläutert zu überprüfen, ob das Kochgeschirr noch die Induktionsheizeinrichtung überdeckt wie zuvor bzw. ausreichend überdeckt. Wird dabei festgestellt, dass das Kochgeschirr entfernt worden ist, so wird daraufhin eine Leistungserzeugung an der Induktionsheizeinrichtung unterbrochen.

In einer Weiterbildung kann vorgesehen sein, dass nach Erkennen einer erneuten Vertikalbewegung des Kochgeschirrs mit plötzlichem Stopp der Bewegung das Aufsetzen des Kochgeschirrs auf eine Fläche erkannt wird von der Kochgeschirr-Steuerung. Diese überträgt dann eine entsprechende Signalisierung über die Kommunikationseinrichtungen an die Kochfeld-Steuerung. Selbst bei Feststellung, dass ein Kochgeschirr von der Induktionsheizeinrichtung entfernt worden ist, kann die Kommunikation zwischen diesen immer noch stattfinden. Daraufhin kann die Kochfeld-Steuerung direkt ein vorgenanntes Kochgeschirr-Erkennungsverfahren an allen Induktionsheizeinrichtungen durchführen, die nicht von einem Kochgeschirr überdeckt sind. Somit kann möglicherweise einfach und sehr schnell erkannt werden, ob und wo das Kochgeschirr wieder auf das Kochfeld aufgesetzt worden ist. Sollte es auf eine Arbeitsfläche neben dem Kochfeld aufgesetzt worden sein, so wird dies dann eben auch erkannt, weil keine der zuvor unbedeckten Induktionsheizeinrichtungen auf einmal überdeckt ist.

In nochmals weiterer möglicher Ausgestaltung der Erfindung kann mittels des Vibrationssensors und der speziellen Leistungserzeugung sowie des Überwachens eines Musters an Vibrationen eine individuelle Identifikation eines bestimmten einzelnen Kochgeschirrs erfolgen. Nach Erkennen des Aufsetzens eines Kochgeschirrs über mindestens eine Induktionsheizeinrichtung mittels des genannten Betriebsverfahren als induktiver Topferkennungssensor wird diese Induktionsheizeinrichtung mittels der Leistungsversorgung derart angesteuert, dass sie mit einem Muster unterschiedlicher Arbeitsfrequenzen und/oder unterschiedlicher Leistungshöhen betrieben wird. Damit werden bestimmte Vibrationen im darüber aufgesetzten Kochgeschirr erzeugt, und zwar auf unterschiedliche Art und Weise bzw. mit unterschiedlichen Frequenzen und Intensitäten. Infolgedessen können sich entsprechende unterschiedliche Vibrationen im Kochgeschirr ergeben, möglicherweise auch harmonische Vibrationen, wenn sozusagen eine Frequenz für die Muster durchfahren wird. Diese harmonischen Vibrationen im Kochgeschirr können dann relativ spezifisch für ein spezielles Kochgeschirr sein, möglicherweise sogar für baugleiche Kochgeschirre etwas unterschiedlich sein. Diese Vibrationen bzw. harmonischen Vibrationen werden mittels des Vibrationssensors erfasst, und Informationen dazu oder darüber werden von der Kochgeschirr-Steuerung mittels der Kommunikationseinrichtungen an die Kochfeld-Steuerung übertragen. Die Kochfeld-Steuerung kann dann das jeweilige Kochgeschirr identifizieren. Dazu ist es beispielsweise möglich, in der Kochgeschirr-Steuerung oder in der Kochfeld-Steuerung zu einer Mehrzahl von Kochgeschirren bestimmte Daten und/oder Eigenschaften abzuspeichern. So können beispielsweise sämtliche vorhandenen Kochgeschirre sowie neu hinzukommende Kochgeschirre zum Verwendungsbeginn einmal erfasst und ihre Eigenschaften abgespeichert werden. Dies kann genutzt werden, bestimmte Kochverfahren als vorgenannte Automatikprogramme durchzuführen.

Ein Kochgeschirr kann auch ganz allgemein immer eine individuelle Codierung oder einen Identifier übertragen an die Kochfeld-Steuerung. Somit können alle seine Signale oder allgemein Übertragungen genau diesem Kochgeschirr zugeordnet werden.

Des Weiteren ist es möglich, dass die Kochgeschirr-Steuerung für jeweils genau ein spezielles Kochgeschirr ausgelegt ist. Sie kann dann Informationen zu diesem speziellen Kochgeschirr enthalten und jeweils im Betrieb während dessen Beheizen diese Informationen an die Kochfeld-Steuerung weitergeben, damit diese sie dann verwendet für ein mögliches genaueres Erfassen von beispielsweise Temperaturen an diesem Kochgeschirr.

Als ein mögliches Muster für beispielsweise vier bis acht Induktionsheizeinrichtungen bei einem Kochfeld kann vorgesehen sein, dass Impulse bzw. Pings in einem zeitlichen Abstand von jeweils 100 msec zueinander als Ansteuerung für eine Leistungserzeugung der Induktionsheizeinrichtung verwendet werden. Ein Ping kann dabei etwa 10 msec bis 30 msec dauern. Bei einer Arbeitsfrequenz von 25 kHz für die Induktionsheizeinrichtungen sind dies etwa 400 bis 1200 Schwingungen und somit auch ebenso viele Vibrationen im Kochgeschirr. Für eine erste Induktionsheizeinrichtung kann der geringstmögliche zeitliche Abstand von 100 msec vorgesehen sein, und die entsprechenden zwei Pings werden dann zu Beginn einer Sequenz erzeugt, die beispielsweise 4 sec dauern kann.

100 msec nach dem zweiten Ping der ersten Induktionsheizeinrichtung erfolgt der erste Impuls bzw. Ping für die zweite Induktionsheizeinrichtung. Mit einem zeitlichen Abstand von 200 msec erfolgt der zweite Impuls bzw. Ping. Nach nochmals 200 msec erfolgt ein erster Ping für eine dritte Induktionsheizeinrichtung, und nach 300 msec erfolgt deren zweiter Ping. Dieses Muster kann so fortgesetzt werden, dass mit jeweils um 100 msec zunehmendem zeitlichem Abstand zwei Pings an derselben Induktionsheizeinrichtung erzeugt werden. Nach dem zweiten Ping an einer Induktionsheizeinrichtung dauert es 100 msec, bis der erste Ping an einer weiteren Induktionsheizeinrichtung erfolgt.

Somit lässt sich bei diesem Muster für mögliche Antworten eines Vibrationssensors sowohl an der zeitlichen Stelle innerhalb der Sequenz als auch vor allem am zeitlichen Abstand zwischen den beiden Pings genau erkennen, von welcher der acht Induktionsheizeinrichtungen er kommt. Weitere Muster sind selbstverständlich möglich, sie werden nachfolgend noch erläutert.

In alternativer Ausgestaltung kann vorgesehen sein, dass ein Aufsetzen eines Kochgeschirrs erkannt wird über eine übliche Funktion zur Topferkennung am Kochfeld. Dann wird nach einer Vorgabe durch eine Bedienperson eine induktive Beheizung dieses Kochgeschirrs gestartet mittels der darunter befindlichen Induktionsheizeinrichtung. Ein Temperatursensor am Kochgeschirr erfasst somit eine geänderte Temperatur, was von der Kochgeschirr-Steuerung initiativ als Temperatursignal an das Kochfeld bzw. an eine Kochfeld-Steuerung gesendet wird. Daraufhin veranlasst die Kochfeld-Steuerung sozusagen die Identifizierung dieses Kochgeschirrs bzw. dieser Quelle von Temperatursignalen. Somit startet das Verfahren, nachdem ein Beheizen des Kochgeschirrs bereits begonnen worden ist. Damit kann erreicht werden, dass das Verfahren nur dann durchgeführt wird, wenn auch ein dazu geeignetes Kochgeschirr aufgestellt worden ist und sich sozusagen von sich aus gemeldet hat.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Darstellung eines erfindungsgemäßen Systems mit Induktionskochfelds und einem auf einen Heizbereich einer Induktionsheizspule aufgesetzten Kochgeschirr,
- Fig. 2: eine vereinfachte Darstellung der Funktionalitäten des Kochgeschirrs mit Vibrationssensor und Kochgeschirr-Steuerung,
- Fig. 3 bis 7: verschiedene Muster für eine Leistungserzeugung.

### Detaillierte Beschreibung der Ausführungsbeispiele

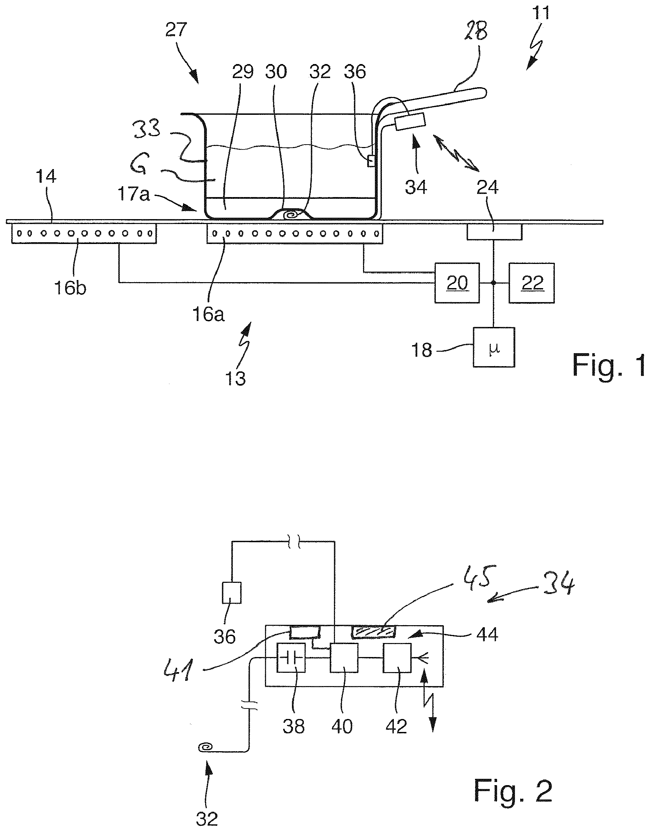

In der Fig. 1 ist ein erfindungsgemäßes System 11 dargestellt mit einem erfindungsgemäßen Induktionskochfeld 13 und einem Kochgeschirr 27. Das Induktionskochfeld 13 weist eine Kochfeldplatte 14 auf, unter der beispielhaft zwei Induktionsheizspulen 16a und 16b mit etwas Abstand angeordnet sind. In der Praxis sind dies vorteilhaft mehr Induktionsheizspulen 16, beispielsweise vier oder sechs oder acht oder sogar bis zu zwanzig oder dreißig Induktionsheizspulen bei sogenannten Flächenkochfeldern.

Des Weiteren weist das Induktionskochfeld 13 eine Kochfeld-Steuerung 18 auf, die mit einer Leistungsversorgung 20, einer Sende-/Empfangseinrichtung als vorgenannte Kommunikationseinrichtung 22 zur drahtlosen Kommunikation und einer Bedieneinrichtung 24 an der Unterseite der Kochfeldplatte 14 verbunden ist. Diese Funktionseinheiten sind jeweils wie üblich ausgebildet. Die Leistungsversorgung weist vorteilhaft Leistungsschalter in üblicher Verschaltung auf. Die Bedieneinrichtung 24 weist Bedienelemente auf, vorzugsweise als Berührungsschalter, sowie gegebenenfalls auch Anzeigemittel wie Leuchtanzeigen und/oder Displays. Ein Funkstandard für die Kommunikationseinrichtung 22 kann grundsätzlich vielfältig ausgebildet sein, wie eingangs erläutert worden ist. Vorteilhaft ist es aus den vorgenannten Möglichkeiten Bluetooth bzw. BLE, aber auch ZigBee, WLAN oder ähnliche, sowie proprietäre Lösungen ohne einen allgemeingültigen Standard.

Oberhalb der Induktionsheizspulen 16a und 16b ist jeweils eine Kochstelle 17 gebildet mit einer Fläche, die jeweils in etwa der Fläche der Induktionsheizspulen 16 entspricht. Auf der rechten Kochstelle 17a ist ein erfindungsgemäßes Kochgeschirr 27 mit Kochgeschirrboden 29 und Kochgeschirrwandung 33 sowie einem Griff 28 angeordnet bzw. dort auf die Oberseite der Kochfeldplatte 14 aufgesetzt. Darin befindet sich ein allgemeines Gargut G. Das Kochgeschirr 27 weist in einer Ausnehmung 30 des Kochgeschirrbodens 29 eine vorgenannte Induktionsspule 32 auf. Die Induktionsspule 32 weist wenige Windungen auf und ist derart an der Unterseite des Kochgeschirrbodens 29 angeordnet, dass sie freiliegt bzw. vom restlichen Boden nicht gegen das Magnetfeld der Induktionsheizspule 16a abgeschirmt ist. Dies ist wichtig für die zuvor beschriebene induktive Energieübertragung. Diese induktive Energieübertragung von der Induktionsheizspule 16a an die Induktionsspule 32 braucht nicht näher erläutert zu werden zur Energieversorgung eines Kochgeschirrmoduls 34, da sie arbeitet wie üblich. Zusätzlich wird auf die vorgenannte DE 102018221521.9 verwiesen. Die Induktionsspule 32 ist mit dem Kochgeschirrmodul 34 als vorgenannte Baueinheit verbunden, das in der Fig. 2 in Vergrößerung dargestellt ist und nachfolgend noch im Detail erläutert wird. Das Kochgeschirrmodul 34 steht in drahtloser Kommunikation bzw. Funkverbindung mit der Kommunikationseinrichtung 22.

In der Fig. 2 ist das Kochgeschirrmodul 34 in Vergrößerung dargestellt. Mittels einer elektrischen Verbindung als Kabel odgl. ist das Kochgeschirrmodul 34 mit der Induktionsspule 32 verbunden. Auf ähnliche Art und Weise ist das Kochgeschirrmodul 34 mit einem vorgenannten Temperatursensor 36 elektrisch leitend verbunden, der außerhalb davon angeordnet ist und vorteilhaft gemäß Fig. 1 im Inneren des Kochgeschirrs 27 angeordnet ist, so dass er von darin befindlichem Wasser oder Gargut G umgeben ist und dessen Temperatur bestimmen kann. Dieser Temperatursensor 36 kann ebenso noch tiefer und somit näher beim Kochgeschirrboden 29 angeordnet sein oder sogar in diesem Kochgeschirrboden 29 eingelassen sein, wenn nicht die Garguttemperatur, sondern die Bodentemperatur erfasst werden soll. So kann er beispielsweise direkt anstelle der Induktionsspule 32 vorgesehen sein und ebenso angeschlossen sein, alternativ zusätzlich zu dieser im Kochgeschirrboden 29. Anstelle des Temperatursensors 36 können alternativ oder zusätzlich noch weitere Sensoren wie Drucksensoren, Gewichtssensoren odgl. vorgesehen sein.

Des Weiteren weist das Kochgeschirrmodul 34 einen Energiespeicher 38 auf, der direkt mit der Induktionsspule 32 verbunden ist. Dies kann ein Akkumulator sein, alternativ kann es ein Kondensator sein, da er keine besonders großen Energiemengen speichern muss, vor allem wenn mit Bluetooth bzw. BLE oder Zigbee gesendet wird, dies aber möglichst schnell und verlustfrei sein sollte. In eingangs genannter alternativer Ausgestaltung der Erfindung ist nur der Energiespeicher 38 vorhanden ohne die zugegebenermaßen aufwendig anzuordnende Induktionsspule 32. Dann kann der Energiespeicher 38 für etwas größere Energiemengen ausgebildet sein und ein aufladbarer Akkumulator oder eine Batterie sein, die ausgewechselt werden kann.

Im Kochgeschirrmodul 34 ist ein integrierter Schaltkreis als Kochgeschirr-Steuerung 40 vorgesehen, vorteilhaft als Mikrocontroller. Die Kochgeschirr-Steuerung 40 steuert eine Kommunikationseinrichtung 42 des Kochgeschirrs 27 mit Sendeantenne 44 an, vorteilhaft ausgelegt für den vorgenannten Bluetooth- bzw. BLE-Standard oder Zigbee. Die Kommunikationseinrichtung 42 steht in vorgenannter drahtloser Kommunikation bzw. Funkverbindung mit der Kommunikationseinrichtung 22.

Vor allem enthält das Kochgeschirrmodul 34 einen Vibrationssensor 41, der wie zuvor beschrieben ausgebildet ist und der vorteilhaft auf einem piezoelektrischen Effekt oder MEMS-Technologie basiert. Dieser Vibrationssensor 41 ist ausgebildet wie zuvor erläutert, so dass er Körperschall bzw. Schwingungen oder Vibrationen erfasst, und zwar sowohl in zeitlicher Hinsicht, also bezüglich Dauer und Frequenz, als auch hinsichtlich Höhe bzw. Intensität. Damit können dann Vibrationen, die durch die induktive Beheizung ausgelöst worden sind, erfasst werden, und zwar bezüglich Frequenz und Intensität sowie bzgl. Dauer.

Des Weiteren enthält das Kochgeschirrmodul 34 einen Haltemagnet 45. Dieser dient zur Befestigung des Kochgeschirrmoduls 34 am Griff 28 des Kochgeschirrs 27, wie dies in der Fig. 1 dargestellt ist. Damit kann das Kochgeschirrmodul 34 magnetisch am Griff 28 angebracht werden, beispielsweise an der Unterseite nahe zur Wandung 33. Dadurch wird die Funktionalität des Griffs 28 möglichst wenig beeinträchtigt. Als Alternative zu einer magnetischen Befestigung kann eine eingangs genannte Rasteinrichtung vorgesehen sein. Als nochmals weitere Alternative kann eine Befestigung am Griff 28 mit einer Art Schelle oder Band erfolgen. Wichtig ist jedenfalls, dass das Kochgeschirrmodul 34 und somit auch der Vibrationssensor 41 fest an dem Kochgeschirr 27 selbst oder am Griff 28 befestigt sind oder sogar im Griff 28 integriert sind. Somit können Vibrationen bzw. Körperschall am Kochgeschirr 27, ausgehend von dessen Boden 29, vom Vibrationssensor 41 gut und sicher erfasst werden. Gleichzeitig kann das Kochgeschirrmodul 34 samt Temperatursensor 36 leicht und vorteilhaft werkzeuglos vom Kochgeschirr 27 entfernt werden, eine elektrische Verbindung an die Induktionsspule 32 könnte mittels einer Steckverbindung trennbar ausgebildet sein.

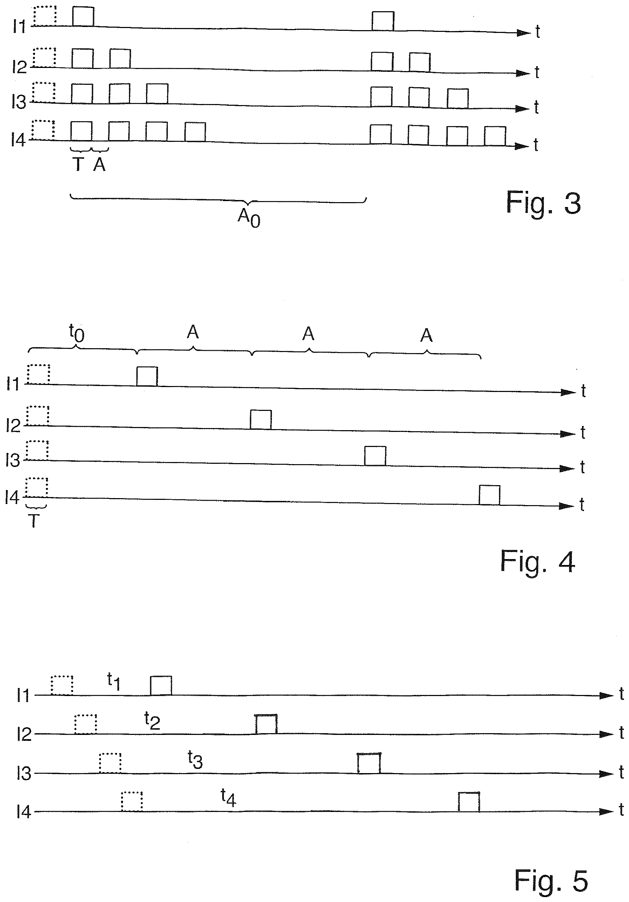

In der Fig. 3 ist ein erstes Beispiel von bestimmten vorgegebenen zeitlichen Mustern für eine Leistungserzeugung für beispielhaft vier Induktionsheizspulen I1 bis I4 dargestellt. Zuerst kann gleichzeitig für alle vier Induktionsheizspulen ein gepunktet dargestellter Synchronisations-Ping erzeugt werden, was aber nicht zwingend so sein muss. Vorteilhaft werden ein solcher Synchronisations-Ping sowie auch die weiteren Pings bzw. Pulse auf eingangs genannte Art und Weise erzeugt mit einer Betriebsfrequenz bzw. Resonanzfrequenz eines Schwingkreises der Leistungsversorgung für die Induktionsheizspulen I1 bis I4, in dem sich die jeweilige Induktionsheizspule befindet. Seine Dauer kann im vorgenannten Bereich liegen, beispielsweise 50 msec betragen. Dies reicht aus für eine sichere Erkennung mittels des Vibrationssensors 41, dass ein solcher Ping erfolgt ist und wie lange seine Dauer war. Die Intensität bzw. Leistungshöhe braucht dabei nicht sehr hoch zu sein, sie kann bei 1% bis 20% einer maximalen Leistung der Induktionsheizspule liegen.

Nach kurzer Zeit wird an allen vier Induktionsheizspulen I ein erster Ping mit einer bestimmten Höhe bzw. Intensität für die Dauer T erzeugt, beispielsweise 50 msec. Bei der ersten Induktionsheizspule I1 wird dann erst wieder nach dem zeitlichen Abstand A₀ der nächste einzelne Ping mit derselben Form erzeugt. Bei der zweiten Induktionsheizspule I2 wird kurz nach dem ersten Ping, nämlich mit dem zeitlichen Abstand A dazu, ein zweiter Ping mit derselben Form erzeugt. Dann vergeht eine Weile, nämlich (Ao-T-A), bis gleichzeitig mit der ersten Induktionsheizspule I1 wieder ein erster Ping und dann nach kurzem zeitlichen Abstand A ein zweiter Ping erzeugt wird. Der zeitliche Abstand A kann 50 msec bis 500 msec betragen, beispielsweise etwa 100 msec. Der zeitliche Abstand A₀ kann 1 sec bis 4 sec betragen. Zwei empfangene Pings innerhalb der Zeit A₀ weisen auf die zweite Induktionsheizspule I2 hin.

Das Muster setzt sich nun ähnlich fort für die dritte Induktionsheizspule I3 und für die vierte Induktionsheizspule I4, wobei drei Pings kurz hintereinander bzw. vier Pings kurz hintereinander, jeweils mit demselben zeitlichen Abstand A zueinander, erzeugt werden. Durch Abzählen dieser Pings, eventuell nach dem Synchronisations-Ping, kann direkt die Nummer der dieses Muster erzeugenden Induktionsheizspule I abgelesen bzw. von der Kochgeschirr-Steuerung 40 erkannt werden. Diese Information wird also von der Kochgeschirr-Steuerung 40 erkannt und in Zusammenarbeit mit der Kommunikationseinrichtung 42 als Information über die Kommunikationseinrichtung 22 an die Kochfeld-Steuerung 18 gesendet. Diese gesendete Information kann dann beispielsweise bereits die ausgewertete Zahl sein, also "1" bzw. "11" odgl.. Alternativ könnte auch nur das Muster der Codierung bzw. der Pings übersendet werden, sodass dann die Auswertung weitgehend von der Kochfeld-Steuerung 18 durchgeführt wird.

Der Vibrationssensor 41 erfasst Vibrationen mit einem zeitlichen Muster der Pings, die von der Induktionsheizspule I1 erzeugt worden sind. Das erfasste Muster entspricht relativ genau demjenigen der Fig. 3. Eine induktive Energieübertragung einer der anderen Induktionsheizspulen wird nicht erfasst, da deren Magnetfeld nicht in das Kochgeschirr 27 übertragen bzw. eingekoppelt wird. Somit erfasst die Kochfeld-Steuerung 18 aufgrund der Rückmeldung der Kochgeschirr-Steuerung 40, dass dieses Kochgeschirr 27 das bestimmte vorgegebene zeitliche Muster der Induktionsheizspule I1 empfangen hat und somit auf dieser aufgesetzt sein muss. Damit ordnet die Kochfeld-Steuerung 18 dieses Kochgeschirr 27 dieser Induktionsheizspule I1 bzw. 16a gemäß Fig. 1 zu. Vom Temperatursensor 36 übertragene Temperatursignale bzw. -informationen können dann von der Kochfeld-Steuerung 18 als genau zu dieser Induktionsheizspule zugehörig verwertet werden. Damit kann mittels der Induktionsheizspule I1 bzw. 16a eine Temperatursteuerung für Gargut im Kochgeschirr 27 erfolgen.

Bei dem bestimmten vorgegebenen zeitlichen Muster gemäß Fig. 4 wird an allen vier Induktionsheizspulen I1 bis I4 zur gleichen Zeit ein erster gepunktet dargestellter Ping zur Synchronisation erzeugt mit einer Dauer T. Nach einer Zeit to nach dem ersten Ping wird an der ersten Induktionsheizspule I1 ein zweiter Ping erzeugt. Mit zeitlichem Abstand A später wird an der zweiten Induktionsheizspule I2 der zweite Ping erzeugt, mit nochmals zeitlichem Abstand A dazu wird an der dritten Induktionsheizspule I3 der zweite Ping erzeugt, usw.. Hier kann der zeitliche Abstand to demjenigen von A entsprechen, so dass aus Abzählen dieser zeitlichen Abstände bis zum erneuten Einsetzen des Musters die Nummer der Induktionsheizspule ausgelesen werden kann. to bzw. A kann hier etwa 200 msec bis 600 msec betragen.

Bei Fig. 5 ist für vier Induktionsheizspulen I1 bis I4 ein vorteilhaftes bestimmtes vorgegebenes zeitliches Muster dargestellt. Der zeitliche Abstand zum nachfolgenden zweiten Ping, der von t1 bis t4 variiert, ergibt die Nummer der dieses Muster sendenden Induktionsheizspule. So kann dieser zeitliche Abstand beispielsweise ein Vielfaches einer Zeit t₁ sein. Somit beträgt t₂ = 2 × t₁, t₃ beträgt t₃ = 3 × t₁, und t₄ beträgt t₄ = 4 × t₁. Somit kann hier aus dem vielfachen der bekannten Zeit t₁ die Nummer der Induktionsheizspule erkannt werden. Die Dauer t₁ kann etwa 100 msec bis 500 msec betragen.

Anhand des gesendeten Musters der jeweiligen Induktionsheizspule kann im Kochgefäß 27 die Nummer der Induktionsheizspule, über der sich das Kochgeschirr 27 befindet bzw. deren Muster empfangen werden kann, der externen Bedieneinrichtung 46, ggf. ebenso aber auch der Kochfeld-Steuerung 18, mitgeteilt werden. Dann kann eine sichere Zuordnung von genau diesem Kochgeschirr 27 zu genau dieser Kochstelle 17 bzw. dieser Induktionsheizspule 16 erfolgen, was sehr wichtig ist. Da das Kochgeschirr 27 ja auch noch die weiteren Sensoren wie den Temperatursensor 36 aufweist, kann ein exakt ablaufendes Kochprogramm odgl. auf bekannte Art und Weise durchgeführt werden.

Bei den zuvor beschriebenen "Pings" handelt es sich um eine sehr kurze, sehr geringe Leistungsabgabe, die das Kochgeschirr nur unmerklich erwärmen kann. Die Leistungsabgabe kann jedoch ebenfalls derart groß sein, dass das Kochgeschirr gering, vorzugsweise um einige Kelvin, erwärmt wird.

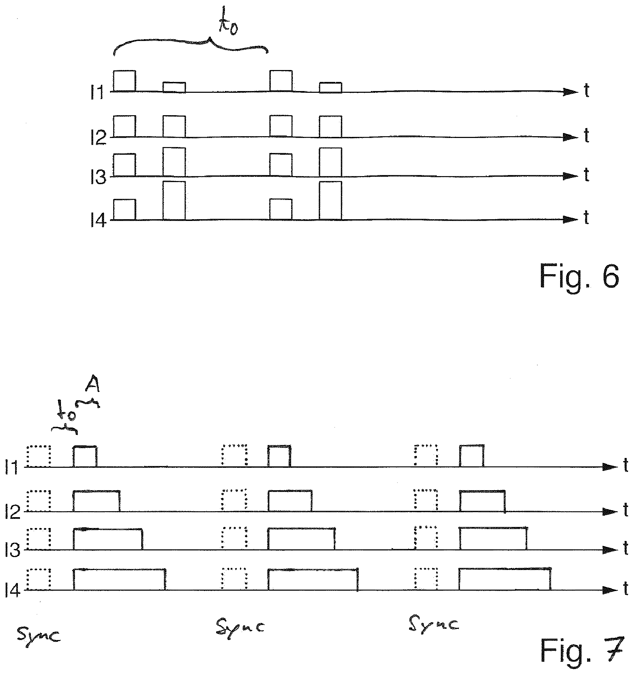

In der Fig. 6 ist eine Möglichkeit dargestellt, wie bei vier Induktionsheizspulen I1 bis I4 als Muster eine Unterscheidung jeweils nach einem gleichzeitig für alle Induktionsheizspulen gesendeten Synchronisations-Ping mit einer Amplitude bzw. Intensität eines nachfolgend gesendeten Pings erzeugt werden kann. Die Intensität steigt dabei schrittweise an mit der höheren Nummer der Induktionsheizspule. Die Pings mit unterschiedlicher Intensität werden hier gleichzeitig gesendet, da sie gut unterschieden werden können. Sie können aber natürlich zusätzlich auch zeitversetzt gesendet werden als zusätzliche Unterscheidung, beispielsweise ähnlich wie in Fig. 3 bis 5. Der zeitliche Abstand innerhalb jedes Musters zum nachfolgenden Synchronisations-Ping beträgt immer to. Hier kommt es also darauf an, mit welcher Intensität der Vibrationssensor 41 nach dem Synchronisations-Ping Vibrationen am Kochgeschirr 27 erkennt bzw. wie diese in der Intensität zum Synchronisations-Ping sind.

In der Fig. 7 ist eine Möglichkeit dargestellt, wie bei vier Induktionsheizspulen I1 bis I4 als Muster eine Unterscheidung jeweils nach der Länge des Leistungseintrags gemacht werden kann. Zum jeweils gleichen Zeitpunkt wird ein Synchronisation-Ping mit einer Amplitude bzw. Intensität eines nachfolgend gesendeten Pings erzeugt. Diese Synchronisation-Ping muss aber nicht zwingend erzeugt werden, deswegen ist er gepunktet dargestellt. Nach einer Zeit t₀ wird an der Induktionsheizspule I1 ein Ping bzw. zweiter Ping für die Dauer A erzeugt. Nach einiger Zeit wiederum, beispielsweise 500 msec oder 1 Sekunde, wird erneut an allen Induktionsheizspulen ein gepunktet dargestellter Synchronisation-Ping erzeugt. Das Muster wiederholt sich dann regelmäßig für die Induktionsheizspule 11.

Bei der Induktionsheizspule I2 wird eine Zeit to nach dem gepunktet dargestellten Synchronisations-Ping ein nachfolgender zweiter Ping erzeugt, und zwar mit der Dauer 2xA, also doppelt so lang wie an der Induktionsheizspule 11. Auch dieses Muster wiederholt sich. In ähnlicher Form wird bei den Induktionsheizspulen I3 bzw. I4 jeweils eine Zeit t₀ nach dem Synchronisations-Ping für eine Dauer 3xA bzw. 4xA ein zweiter nachfolgender Ping erzeugt. Auch hier wiederholt sich dieses Muster jeweils fortlaufend, wie in Fig. 7 dargestellt ist.

## Patentansprüche

1. System (11) mit einem Kochfeld (13) und mit einem Kochgeschirr (27),
wobei das Kochfeld (13) aufweist:
- eine Kochfeldplatte (14),
- eine Kochfeld-Steuerung (18),
- eine Kommunikationseinrichtung (22) zur drahtlosen Kommunikation mit dem Kochgeschirr (27), wobei die Kommunikationseinrichtung (22) mit der Kochfeld-Steuerung (18) verbunden ist,
wobei das Kochgeschirr (27) aufweist:
- einen Vibrationssensor (41) zur Erfassung von Vibrationen am Kochgeschirr (27), der am Kochgeschirr (27) befestigt ist,
- eine Kochgeschirr-Steuerung (40), die mit dem Vibrationssensor (41) verbunden ist und die zur Erkennung von dessen Sensorsignalen ausgebildet ist,
- eine Kommunikationseinrichtung (42), wobei die Kommunikationseinrichtung (42) zur drahtlosen Kommunikation mit der Kommunikationseinrichtung (22) des Kochfelds ausgebildet ist und die mit der Kochgeschirr-Steuerung (40) verbunden ist,
**dadurch gekennzeichnet, dass**
- eine Induktionsheizeinrichtung (16) unterhalb der Kochfeldplatte (14) zur induktiven Beheizung des Kochgeschirrs (27),
- eine Leistungsversorgung (20) für die Induktionsheizeinrichtung (16), die mit der Kochfeld-Steuerung (18) verbunden ist,
- die Kochfeld-Steuerung (18) dazu ausgebildet ist, mittels der Leistungsversorgung (20) die Induktionsheizeinrichtung (16) mit einem bestimmten vorgegebenen zeitlichen Muster als Leistungserzeugung anzusteuern, wobei dieses bestimmte zeitliche Muster für genau diese Induktionsheizeinrichtung (16) charakteristisch ist,
- die Kochgeschirr-Steuerung (18) dazu ausgebildet ist, über den Vibrationssensor (41) erfasste Vibrationen oder ein erfasstes zeitliches Verhalten von Vibrationen am Kochgeschirr (27), die jeweils durch das induktive Beheizen des Kochgeschirrs (27) mittels der Induktionsheizeinrichtung (16) ausgelöst wurden, als Muster zu erkennen, zu identifizieren und eine dem Muster entsprechende Signalisierung mittels der Kommunikationseinrichtung (42) drahtlos an die Kommunikationseinrichtung (22) des Kochfelds (13) zu senden,
- die Kochfeld-Steuerung (18) dazu ausgebildet ist, anhand der Signalisierung von der Kochgeschirr-Steuerung (40) einen Vergleich mit dem Muster einer Leistungserzeugung für eine bestimmte Induktionsheizeinrichtung (16) zu vergleichen,
- die Kochfeld-Steuerung (18) dazu ausgebildet ist, für den Fall, dass die von der Kochgeschirr-Steuerung (40) empfangene Signalisierung zu dem Muster der Leistungserzeugung der Induktionsheizeinrichtung (16) passt und/oder diesem entspricht, das Kochgeschirr (27) als von der Induktionsheizeinrichtung (16) beheizt und somit zu dieser zugehörig zu definieren.

2. System nach Anspruch 1, **dadurch gekennzeichnet, dass** das Kochgeschirr (27) einen Temperatursensor (36) aufweist, der zur Erfassung einer Temperatur am Kochgeschirrboden (29) oder im Kochgeschirr (27) ausgebildet ist, wobei der Temperatursensor (36) mit der Kochgeschirr-Steuerung (40) verbunden ist, insbesondere mittels eines Anschlusskabels.

3. System nach Anspruch 2, **dadurch gekennzeichnet, dass** der Temperatursensor (36) werkzeuglos lösbar am Kochgeschirr (27) befestigbar ist, vorzugsweise mittels einer Rasteinrichtung oder mittels Magnetkraft, insbesondere nahe dem Kochgeschirrboden (29), vorzugsweise im Inneren des Kochgeschirrs (27).

4. System nach einem der vorhergehenden Ansprüche, **dadurch gekennzeichnet, dass** der Vibrationssensor (41) nicht innerhalb des Kochgeschirrbehälters angeordnet ist, wobei er insbesondere an einer Außenseite der Kochgeschirrwandung oder an einer Griffeinrichtung (28) des Kochgeschirrs (27) angeordnet ist.

5. System nach Anspruch 4, **dadurch gekennzeichnet, dass** der Vibrationssensor (41) werkzeuglos lösbar am Kochgeschirr (27) befestigbar ist, vorzugsweise mittels einer Rasteinrichtung oder mittels Magnetkraft (45).

6. System nach einem der vorhergehenden Ansprüche, **dadurch gekennzeichnet, dass** der Vibrationssensor (41) ein integrierter Sensor als eine Sensor-Baueinheit ist, wobei vorzugsweise der Vibrationssensor (41) zur Erfassung von mechanischen Schwingungen und/oder Körperschall ausgebildet ist und nicht zur Erfassung von akustischen und/oder optischen Veränderungen ausgebildet ist.

7. System nach einem der vorhergehenden Ansprüche, **dadurch gekennzeichnet, dass** die Kochgeschirr-Steuerung (40), die Kommunikationseinrichtung (42) und der Vibrationssensor (41) in einer Baueinheit (34) angeordnet sind bzw. in einem Gehäuse an dem Kochgeschirr (27) angeordnet sind, insbesondere an einer Griffeinrichtung (28) des Kochgeschirrs (27).

8. System nach Anspruch 7, **dadurch gekennzeichnet, dass** die Baueinheit (34) werkzeuglos lösbar am Kochgeschirr (27) befestigbar ist, vorzugsweise mittels einer Rasteinrichtung oder mittels Magnetkraft (45).

9. System nach einem der vorhergehenden Ansprüche, **dadurch gekennzeichnet, dass** das Kochgeschirr (27) oder die Kochgeschirr-Steuerung (40) eine eigene Energiequelle (38) aufweist, vorzugsweise eine Batterie.

10. System nach einem der Ansprüche 1 bis 8, **dadurch gekennzeichnet, dass** die Kochgeschirr-Steuerung (40) zur Energieversorgung einen Induktionsgenerator mit einer eigenen Induktionsspule (32) aufweist, wobei vorzugsweise die Induktionsspule (32) im unteren Bereich des Kochgeschirrs (27) angeordnet ist, vorzugsweise am Kochgeschirrboden (29).

11. Verfahren zum Betrieb eines Systems nach einem der vorhergehenden Ansprüche, **dadurch gekennzeichnet, dass** die folgenden Schritte durchgeführt werden:
- Versetzen des Kochfelds (13) in einem eingeschalteten Zustand,
- Aufsetzen eines Kochgeschirrs (27) auf die Kochfeldplatte (14) über der Induktionsheizeinrichtung (16),
- Erkennen des Aufsetzens des Kochgeschirrs (27) über der Induktionsheizeinrichtung (16) durch die Kochfeld-Steuerung (18),
- Betrieb der Induktionsheizeinrichtung (16) mit einem bestimmten vorgegebenen Muster für die Leistungserzeugung mit zeitlicher Variation und ggf. zusätzlich mit Variation der Höhe der Leistungserzeugung,
- Erfassen von Vibrationen am Kochgeschirr (27) mittels des Vibrationssensors (41), die ausgelöst werden durch induktive Leistungsübertragung an den Kochgeschirrboden (29) des Kochgeschirrs (27),
- Erkennen des Musters der Leistungserzeugung durch die Kochgeschirr-Steuerung (40) aufgrund der erfassten Vibrationen am Kochgeschirr (27),
- Senden von Informationen über das Muster der Leistungserzeugung durch die Kochgeschirr-Steuerung (40) mittels der Kommunikationseinrichtung (42) des Kochgeschirrs (27) an die Kommunikationseinrichtung (22) des Kochfelds (13),
- Zuordnen der von dem Kochgeschirr (27) übersendeten Informationen zu der Induktionsheizeinrichtung (16) durch die Kochfeld-Steuerung (18) und Zuordnen des erkannten Kochgeschirrs (27) zu dieser Induktionsheizeinrichtung (16),
- induktives Beheizen des Kochgeschirrs (27) mittels der zugeordneten Induktionsheizeinrichtung (16).

12. Verfahren nach Anspruch 11, **dadurch gekennzeichnet, dass** zusätzlich zur Zuordnung des Kochgeschirrs (27) zu der Induktionsheizeinrichtung (16) aufgrund der Signalisierung anhand des Vibrationssensors (41) ein tatsächliches Beheizen des Kochgeschirrs (27) durch die Induktionsheizeinrichtung (16) überprüft wird nach einer bestimmten vorgegebenen Überprüfungszeit anhand eines Temperaturanstiegs am Temperatursensor (36), wobei vorzugsweise für den Fall, dass der Temperaturanstieg am Temperatursensor (36) nicht erkannt wird, der Vorgang des Erkennens des Zuordnens der Induktionsheizeinrichtung (16) zu dem Kochgeschirr (27) neu gestartet wird.

13. Verfahren nach Anspruch 11 oder 12, **dadurch gekennzeichnet, dass** mittels des Vibrationssensors (41) eine Vertikalbewegung und/oder eine seitliche Bewegung des Kochgeschirrs (27) erkannt wird und eine entsprechende Signalisierung von der Kochgeschirr-Steuerung (40) über die Kommunikationseinrichtungen (22, 42) an die Kochfeld-Steuerung (18) übertragen wird, wobei von der Kochfeld-Steuerung (18) zusammen mit der Leistungsversorgung (20) und einem Betrieb der Induktionsheizeinrichtung (16) als induktiver Topferkennungssensor das Entfernen des Kochgeschirrs (27) von der Induktionsheizeinrichtung (16) festgestellt wird und daraufhin eine Leistungserzeugung an der Induktionsheizeinrichtung (16) unterbrochen wird, wobei insbesondere nach Erkennen einer erneuten Vertikalbewegung des Kochgeschirrs (27) mit plötzlichem Stopp der Bewegung das Aufsetzen des Kochgeschirrs (27) auf eine Fläche (14) erkannt wird und von der Kochgeschirr-Steuerung (18) eine entsprechende Signalisierung über die Kommunikationseinrichtungen (22, 42) an die Kochfeld-Steuerung (18) übertragen wird, und die Kochfeld-Steuerung (18) daraufhin direkt ein Topferkennungsverfahren an allen Induktionsheizeinrichtungen (16) durchführt, die nicht von einem Kochgeschirr (27) überdeckt sind.

14. Verfahren nach einem der Ansprüche 11 bis 13, **dadurch gekennzeichnet, dass** der Temperatursensor (36) des Kochgeschirrs (27) mit der Kochgeschirr-Steuerung (40) verbunden ist zum Auslesen von Temperatursignalen, wobei die Kochgeschirr-Steuerung (40) die Temperaturinformation anhand der Temperatursignale über die Kommunikationseinrichtung (42) an die Kommunikationseinrichtung (22) des Kochfelds (13) überträgt zur Verwendung in der Kochfeld-Steuerung (18).

15. Verfahren nach einem der Ansprüche 11 bis 14, **dadurch gekennzeichnet, dass** die Kochfeld-Steuerung (18) nach Erkennen des Aufsetzens des Kochgeschirrs (27) über eine Induktionsheizeinrichtung (16) mittels der Leistungsversorgung (20) diese Induktionsheizeinrichtung (16) derart ansteuert, dass sie mit einem Muster unterschiedlicher Arbeitsfrequenzen und/oder unterschiedlicher Leistungshöhen betrieben wird zur Erzeugung von Vibrationen im darüber aufgesetzten Kochgeschirr (27), wobei sich infolge dessen unterschiedliche harmonische Vibrationen im Kochgeschirr (27) ergeben, die für dieses Kochgeschirr (27) charakteristisch sind, wobei diese Vibrationen mittels des Vibrationssensors (41) erfasst werden und Informationen dazu von der Kochgeschirr-Steuerung (40) mittels der Kommunikationseinrichtungen (22, 42) an die Kochfeld-Steuerung (18) übertragen werden zur Identifizierung des Kochgeschirrs (27), wobei vorzugsweise in der Kochgeschirr-Steuerung (40) oder in der Kochfeld-Steuerung (18) zu diesem Kochgeschirr (27) bestimmte Daten und/oder Eigenschaften abgespeichert sind.

## Claims

1. System (11) with a cooking hob (13) and with a cooking utensil (27), the cooking hob (13) having:
- a hob plate (14),
- a hob control (18),
- a communication device (22) for wireless communication with the cooking utensil (27), the communication device (22) being connected to the hob control (18),
the cooking utensil (27) comprising:
- a vibration sensor (41) for detecting vibrations on the cooking utensil (27), which is attached to the cooking utensil (27),
- a cooking utensil control (40) which is connected to the vibration sensor (41) and which is designed to recognize the sensor signals from the latter,
- a communication device (42), wherein the communication device (42) is designed for wireless communication with the communication device (22) of the cooking hob and is connected to the cooking utensil control (40),
**characterized in that**
- an induction heating device (16) below the hob plate (14) for inductively heating the cooking utensil (27),
- a power supply (20) for the induction heating device (16), which is connected to the hob control (18),
- the hob control (18) is designed to control the induction heating device (16) with a specific predetermined time pattern as power generation by means of the power supply (20), this specific time pattern being characteristic of precisely this induction heating device (16),
- the cooking utensil control (18) is designed to recognize and identify vibrations detected by the vibration sensor (41) or a detected time-related behavior of vibrations on the cooking utensil (27), which were each triggered by the inductive heating of the cooking utensil (27) by the induction heating device (16) to recognize and identify a pattern and to send a signal corresponding to the pattern to the communication device (22) of the cooking hob (13) by means of the communication device (42),
- the hob control (18) is designed to compare the signaling from the cooking utensil control (40) with the pattern of power generation for a specific induction heating device (16),
- the hob control (18) is designed to define the cooking utensil (27) as being heated by the induction heating device (16) and thus as belonging to it in the event that the signaling received from the cooking utensil control (40) matches and/or corresponds to the pattern of power generation of the induction heating and/or corresponds to it, to define the cooking utensil (27) as being heated by the induction heating device (16) and thus as belonging to it.

2. System according to claim 1, **characterized in that** the cooking utensil (27) has a temperature sensor (36) which is designed to detect a temperature at the base (29) of the cooking utensil or in the cooking utensil (27), the temperature sensor (36) being connected to the cooking utensil control (40), in particular by means of a connecting cable.

3. System according to claim 2, **characterized in that** the temperature sensor (36) can be attached to the cooking utensil (27) in a tool-free manner, preferably by means of a locking device or by means of magnetic force, in particular close to the cooking utensil base (29), preferably in the interior of the cooking utensil (27).

4. System according to one of the preceding claims, **characterized in that** the vibration sensor (41) is not arranged inside the cooking utensil container, it being arranged in particular on an outer side of the cooking utensil wall or on a handle device (28) of the cooking utensil (27).

5. System according to claim 4, **characterized in that** the vibration sensor (41) can be fastened to the cooking utensil (27) in a tool-free manner, preferably by means of a latching device or by means of magnetic force (45).

6. System according to one of the preceding claims, **characterized in that** the vibration sensor (41) is an integrated sensor as a sensor unit, wherein preferably the vibration sensor (41) is designed to detect mechanical vibrations and/or structure-borne sound and is not designed to detect acoustic and/or optical changes.

7. System according to one of the preceding claims, **characterized in that** the cooking utensil control (40), the communication device (42) and the vibration sensor (41) are arranged in a structural unit (34) or are arranged in a housing on the cooking utensil (27), in particular on a handle device (28) of the cooking utensil (27).

8. System according to claim 7, **characterized in that** the structural unit (34) can be fastened to the cooking utensil (27) without the use of tools, preferably by means of a latching device or by means of magnetic force (45).

9. System according to one of the preceding claims, **characterized in that** the cooking utensil (27) or the cooking utensil control (40) has its own energy source (38), preferably a battery.

10. System according to one of claims 1 to 8, **characterized in that** the cooking utensil control (40) has an induction generator with its own induction coil (32), the induction coil (32) preferably being arranged in the lower region of the cooking utensil (27), preferably on the cooking utensil base (29).

11. Method for operating a system according to one of the preceding claims, **characterized in that** the following steps are carried out:
- placing the cooking hob (13) in an activated state,
- placing a cooking utensil (27) on the cooking hob plate (14) above the induction heating device (16),
- detection of the placing of the cooking utensil (27) over the induction heating device (16) by the hob control (18),
- operation of the induction heating device (16) with a specific predetermined pattern for power generation with a time variation and, if necessary, with an additional variation in the level of power generation,
- detecting vibrations on the cooking utensil (27) by means of the vibration sensor (41), which are triggered by inductive power transfer to the base (29) of the cooking utensil (27),
- recognizing the power generation pattern by the cooking utensil control (40) on the basis of the detected vibrations on the cooking utensil (27),
- sending information about the power generation pattern by the cooking utensil control (40) to the communication device (22) of the cooking hob (13) by means of the communication device (42) of the cooking utensil (27)
- the hob control (18) assigning the information sent by the cooking utensil (27) to the induction heating device (16) and assigning the recognized cooking utensil (27) to this induction heating device (16),
- inductive heating of the cooking utensil (27) by means of the associated induction heating device (16).

12. Method according to claim 11, **characterized in that**, in addition to the assignment of the cooking utensil (27) to the induction heating device (16), an actual heating of the cooking utensil (27) by the induction heating device (16) is checked on the basis of the signalling by means of the vibration sensor (41) after a certain predefined checking time on the basis of a temperature rise at the temperature sensor (36), wherein preferably in the event that the temperature rise at the temperature sensor (36) is not detected, the process of detecting the assignment of the induction heating device (16) to the cooking utensil (27) is restarted.

13. Method according to claim 11 or 12, **characterized in that** a vertical movement and/or a lateral movement of the cooking utensil (27) is detected by means of the vibration sensor (41) and a corresponding signal is transmitted from the cooking utensil control (40) via the communication devices (22, 42) to the hob control (18), wherein the removal of the cooking utensil (27) from the induction heating device (16) is detected by the hob control (18) together with the power supply (20) and an operation of the induction heating device (16) as an inductive cooking utensil detection sensor and power generation at the induction heating device (16) is then interrupted, wherein, in particular, after a renewed vertical movement of the cooking utensil (27) with a sudden stop of the movement, the placing of the cooking utensil (27) on a surface (14) is recognized and a corresponding signal is transmitted from the cooking utensil control (18) transmits a corresponding signal via the communication devices (22, 42) to the hob control (18), and the hob control (18) then directly carries out a cooking utensil detection process at all induction heating devices (16) that are not covered by a cooking utensil (27).

14. Method according to one of claims 11 to 13, **characterized in that** the temperature sensor (36) of the cooking utensil (27) is connected to the cooking utensil control (40) for reading temperature signals, the cooking utensil control (40) transmits the temperature information to the communication device (22) of the cooking hob (13) via the communication device (42) for use in the hob control (18).

15. Method according to one of claims 11 to 14, **characterized in that**, after detecting the placing of the cooking utensil (27) over an induction heating device (16) by means of the power supply (20), the hob control (18) actuates this induction heating device (16) in such a way that it is operated with a pattern of different working and/or different power levels to generate vibrations in the cooking utensil (27) placed on top of it, as a result of which different harmonic vibrations occur in the cooking utensil (27) that are characteristic of this cooking utensil (27), these vibrations being detected by means of the vibration sensor (41) and information about them being transmitted from the cooking utensil control (40) are transmitted to the hob control (18) by means of the communication devices (22, 42) for the purpose of identifying the cooking utensil (27), with data and/or properties specific to this cooking utensil (27) being stored preferably in the cooking utensil control (40) or in the hob control (18).

## Revendications

1. Système (11) avec une table de cuisson (13) et avec une ustensile de cuisson (27), la table de cuisson (13) comprenant :
- une plaque de cuisson (14),
- une commande de table de cuisson (18),
- un dispositif de communication (22) pour une communication sans fil avec l'ustensile de cuisson (27), le dispositif de communication (22) étant connecté à la commande de la table de cuisson (18),
l'ustensile de cuisson (27) comprenant :
- un capteur de vibrations (41) pour détecter les vibrations de l'ustensile de cuisson (27), qui est fixé à l'ustensile de cuisson (27),
- une commande d'ustensile de cuisson (40) qui est reliée au capteur de vibrations (41) et qui est conçue pour reconnaître les signaux de capteur de celui-ci,
- un dispositif de communication (42), le dispositif de communication (42) étant conçu pour une communication sans fil avec le dispositif de communication (22) de la table de cuisson et étant relié à la commande d'ustensile de cuisson (40),
**caractérisé en ce que**
- un dispositif de chauffage par induction (16) sous la plaque de cuisson (14) pour le chauffage par induction de l'ustensile de cuisson (27),
- une alimentation en puissance (20) pour le dispositif de chauffage par induction (16), qui est reliée à la commande de la table de cuisson (18),
- la commande de table de cuisson (18) est conçue pour commander, au moyen de l'alimentation en puissance (20), le dispositif de chauffage par induction (16) avec un modèle temporel prédéterminé déterminé en tant que production de puissance, ce modèle temporel déterminé étant caractéristique de ce dispositif de chauffage par induction (16),
- la commande d'ustensile de cuisson (18) est conçue pour détecter des vibrations par l'intermédiaire du capteur de vibrations (41) ou un comportement temporel détecté de vibrations sur l'ustensile de cuisson (27), qui ont été déclenchées respectivement par le chauffage par induction de l'ustensile de cuisson (27) au moyen du dispositif de chauffage par induction (16), comme modèle, de l'identifier et d'envoyer sans fil une signalisation correspondant au modèle au moyen du dispositif de communication (42) au dispositif de communication (22) de la table de cuisson (13),
- le contrôleur de table de cuisson (18) est conçu pour comparer, sur la base de la signalisation provenant de la commande d'ustensile de cuisson (40), une comparaison avec le modèle de génération de puissance pour un dispositif de chauffage par induction (16) donné,
- le contrôleur de table de cuisson (18) est adapté pour définir l'ustensile de cuisson (27) comme étant chauffé par le dispositif de chauffage par induction (16) et donc associé à celui-ci, dans le cas où la signalisation reçue de la commande d'ustensile de cuisson (40) est adaptée et/ou correspond au modèle de génération de puissance du dispositif de chauffage par induction (16).

2. Système selon la revendication 1, **caractérisé en ce que** l'ustensile de cuisson (27) comporte un capteur de température (36) configuré pour détecter une température au fond de l'ustensile de cuisson (29) ou dans l'ustensile de cuisson (27), le capteur de température (36) étant relié à la commande de l'ustensile de cuisson (40), notamment par un câble de raccordement.

3. Système selon la revendication 2, **caractérisé en ce que** le capteur de température (36) peut être fixé de manière amovible sans outil à l'ustensile de cuisson (27), de préférence au moyen d'un dispositif d'encliquetage ou au moyen de la force magnétique, en particulier près du fond de l'ustensile de cuisson (29), de préférence à l'intérieur de l'ustensile de cuisson (27).

4. Système selon l'une des revendications précédentes, **caractérisé en ce que** le capteur de vibrations (41) n'est pas disposé à l'intérieur du récipient de l'ustensile de cuisson, en particulier il est disposé sur une face extérieure de la paroi de l'ustensile de cuisson ou sur un dispositif de préhension (28) de l'ustensile de cuisson (27).

5. Système selon la revendication 4, **caractérisé en ce que** le capteur de vibrations (41) peut être fixé de manière amovible sans outil à l'ustensile de cuisson (27), de préférence au moyen d'un dispositif d'encliquetage ou d'une force magnétique (45).

6. Système selon l'une des revendications précédentes, **caractérisé en ce que** le capteur de vibrations (41) est un capteur intégré sous la forme d'un module de capteur, le capteur de vibrations (41) étant de préférence conçu pour détecter des vibrations mécaniques et/ou des bruits de structure et n'étant pas conçu pour détecter des modifications acoustiques et/ou optiques.

7. Système selon l'une des revendications précédentes, **caractérisé en ce que** la commande d'ustensile de cuisson (40), le dispositif de communication (42) et le capteur de vibrations (41) sont disposés dans une unité modulaire (34) ou sont disposés dans un boîtier sur l'ustensile de cuisson (27), en particulier sur un dispositif de poignée (28) de l'ustensile de cuisson (27).

8. Système selon la revendication 7, **caractérisé en ce que** l'unité modulaire (34) peut être fixée de manière amovible sans outil à l'ustensile de cuisson (27), de préférence au moyen d'un dispositif d'encliquetage ou d'une force magnétique (45).

9. Système selon l'une des revendications précédentes, **caractérisé en ce que** l'ustensile de cuisson (27) ou la commande d'ustensile de cuisson (40) comporte sa propre source d'énergie (38), de préférence une batterie.

10. Système selon l'une quelconque des revendications 1 à 8, **caractérisé en ce que** la commande d'ustensile de cuisson (40) comprend un générateur d'induction avec sa propre bobine d'induction (32) pour l'alimentation en énergie, la bobine d'induction (32) étant de préférence disposée dans la zone inférieure de l'ustensile de cuisson (27), de préférence au fond de l'ustensile de cuisson (29).

11. Procédé de fonctionnement d'un système selon l'une des revendications précédentes, **caractérisé en ce que** les étapes suivantes sont effectuées :
- Mise en marche de la table de cuisson (13),
- Mise en place d'un ustensile de cuisson (27) sur la plaque de cuisson (14) au-dessus du dispositif de chauffage par induction (16),
- Détection de la pose de l'ustensile de cuisson (27) sur le dispositif de chauffage par induction (16) par la commande de la table de cuisson (18),
- Fonctionnement du dispositif de chauffage par induction (16) selon un modèle prédéfini déterminé pour la production de puissance avec une variation dans le temps et, le cas échéant, avec une variation supplémentaire de la hauteur de la production de puissance,
- Détection de vibrations sur l'ustensile de cuisson (27) au moyen du capteur de vibrations (41), qui sont déclenchées par la transmission de puissance par induction au fond (29) de l'ustensile de cuisson (27),
- Reconnaissance du modèle de génération de puissance par la commande d'ustensile de cuisson (40) sur la base des vibrations détectées sur l'ustensile de cuisson (27),
- Envoyer des informations sur le modèle de production d'énergie par la commande d'ustensile de cuisson (40) au moyen du dispositif de communication (42) de l'ustensile de cuisson (27) au dispositif de communication (22) de la table de cuisson (13),
- l'association des informations transmises par l'ustensile de cuisson (27) au dispositif de chauffage par induction (16) par le contrôleur de table de cuisson (18) et l'association de l'ustensile de cuisson (27) reconnu à ce dispositif de chauffage par induction (16),
- chauffage par induction de l'ustensile de cuisson (27) au moyen du dispositif de chauffage par induction (16) associé.

12. Procédé selon la revendication 11, **caractérisé en ce qu'**en plus de l'affectation de l'ustensile de cuisson (27) au dispositif de chauffage par induction (16) sur la base de la signalisation à l'aide du capteur de vibrations (41), un chauffage effectif de l'ustensile de cuisson (27) par le dispositif de chauffage par induction (16) est contrôlé après un temps de contrôle prédéfini déterminé à l'aide d'une augmentation de température au niveau du capteur de température (36), de préférence, dans le cas où l'augmentation de température n'est pas détectée au niveau du capteur de température (36), le processus de détection de l'association du dispositif de chauffage par induction (16) à l'ustensile de cuisson (27) est redémarré.

13. Procédé selon la revendication 11 ou 12, **caractérisé en ce qu'**un mouvement vertical et/ou un mouvement latéral de l'ustensile de cuisson (27) est détecté au moyen du capteur de vibrations (41) et une signalisation correspondante est transmise par la commande de l'ustensile de cuisson (40) à la commande de la table de cuisson (18) via les dispositifs de communication (22, 42), l'éloignement de l'ustensile de cuisson (27) du dispositif de chauffage par induction (16) étant détecté par la commande de table de cuisson (18) conjointement avec l'alimentation en puissance (20) et un fonctionnement du dispositif de chauffage par induction (16) en tant que capteur de détection de casserole inductif, et une production de puissance étant ensuite interrompue sur le dispositif de chauffage par induction (16), dans lequel, notamment après détection d'un nouveau mouvement vertical de l'ustensile de cuisson (27) avec arrêt soudain du mouvement, la pose de l'ustensile de cuisson (27) sur une surface (14) est détectée et une signalisation correspondante est transmise par le dispositif de commande d'ustensile de cuisson (18) au dispositif de commande de table de cuisson (18) par l'intermédiaire des dispositifs de communication (22, 42), et le dispositif de commande de table de cuisson (18) exécute alors directement un procédé de détection de casserole sur tous les dispositifs de chauffage par induction (16) qui ne sont pas recouverts par un ustensile de cuisson (27).

14. Procédé selon l'une des revendications 11 à 13, **caractérisé en ce que** le capteur de température (36) de l'ustensile de cuisson (27) est relié a la commande d'ustensile de cuisson (40) pour lire des signaux de température, la commande d'ustensile de cuisson (40) transmettant l'information de température à l'aide des signaux de température via le dispositif de communication (42) au dispositif de communication (22) de la table de cuisson (13) pour une utilisation dans le contrôleur de table de cuisson (18).

15. Procédé selon l'une quelconque des revendications 11 à 14, **caractérisé en ce que**, après avoir détecté la mise en place de l'ustensile de cuisson (27) par l'intermédiaire d'un dispositif de chauffage par induction (16), le contrôleur de table de cuisson (18) commande, au moyen de l'alimentation électrique (20), ce dispositif de chauffage par induction (16) de manière à ce qu'il fonctionne avec un modèle de différentes fréquences de travail et/ou de différents niveaux de puissance afin de générer des vibrations dans l'ustensile de cuisson (27) placé au-dessus, ce qui entraîne différentes vibrations harmoniques dans l'ustensile de cuisson (27), qui sont caractéristiques de cet ustensile de cuisson (27), ces vibrations étant détectées au moyen du capteur de vibrations (41) et des informations à ce sujet étant transmises par la commande de l'ustensile de cuisson (40) au moyen des dispositifs de communication (22, 42) à la commande de la table de cuisson (18) pour l'identification de l'ustensile de cuisson (27), certaines données et/ou propriétés concernant cet ustensile de cuisson (27) étant de préférence mémorisées dans la commande de l'ustensile de cuisson (40) ou dans la commande de la table de cuisson (18).
